# EUROPEAN PATENT SPECIFICATION

(11) **EP 1 805 953 B1**
(45) Date of publication and mention of the grant of the patent: **21.07.2010**
(21) Application number: 05796635.0
(22) Date of filing: 24.10.2005
(51) Int. Cl.: H04W 56/00

(54) **APPARATUS AND METHOD FOR TRANSMITTING DATA BY RADIO**
VORRICHTUNG UND VERFAHREN ZUM SENDEN VON DATEN PER FUNK
APPAREIL ET PROCEDE DE TRANSMISSION DE DONNEES PAR RADIO

(30) Priority: 26.10.2004 GB 0423696
(43) Date of publication of application: 11.07.2007
(73) Proprietor: M.I.E. Medical Research Ltd., 6 Wortley Moor Road Leeds, West Yorkshire LS12 4JF (GB)
(72) Inventor: VYCHODIL, Rostislav, 77900 Olomouc (CZ); ELLIS, Malcolm, Otley, Leeds LS2 1 3NZ (GB)
(74) Representative: Brown, George Laurence
(86) International application number: PCT/GB2005/004098
(87) International publication number: WO 2006/046015

(56) References cited:
- US-A- 5 717 704
- US-A- 5 921 938

## Description

The present invention relates to an apparatus and method for transmitting data by radio and in particular to the transmission of time-stamped data by radio. The present invention can be applied to a wireless sensor and a wireless telemetry system.

In many applications it is desirable to transmit and receive data over a wireless link. Using a wireless link eliminates physical links and can allow more flexibility in the transmission of data, particularly between mobile devices. One area in which wireless transmission of data can be particularly beneficial is remote telemetry, in which a base station receives data from one or more sensors by a radio link. It is important that the data from the sensors can be accurately placed in time so that the order of the data samples is maintained at the receiver, however this is difficult to achieve using a wireless link.

US-5921938 discusses synchronising the clock of an electronic physiological instrument with a remote time base. The remote time base transmits a request to the electronic physiological instrument for its current time. A time difference of the received current time and a reference time is then determined and associated with data from the electronic physiological instrument.

It is particularly difficult when the wireless link is subject to interference, since some data may need to be re-transmitted to overcome errors in transmission and therefore it is not guaranteed that all the data will be received in the correct order.

If a wireless link is implemented using the Bluetooth HCI protocol version 1.2 or higher, there are several ways in which data from a remote sensor can be transmitted to a base station in order to maintain the order of the samples received.

In a first method a synchronous link between the sensor and the base station can be set up using high level protocols provided by the Bluetooth hardware. This synchronous transmission channel can preserve the relative time of data transmitted over the link. However, maintenance of the synchronous link wastes power and processing resources because the link is symmetrical and if data is transmitted at less than the rate of the link it is difficult to reallocate any unused bandwidth. It is also not possible to set up a synchronous link between a base station and more than three remote devices due to limitations of the Bluetooth hardware.

In a second method each piece of data transmitted from a sensor to the base station can have time stamp data attached, allowing it to be accurately located in time even if there is a delay in transmission. In order to implement this method using two or more sensors which have no physical link, and which therefore cannot share a clock, it is necessary to ensure that the clock in each sensor is synchronised.

Bluetooth hardware operates over a short range local network, known as a piconet. The piconet has a master clock shared by all devices connected to it. The master clock is implemented directly in the Bluetooth hardware, however it is possible to request its value if required by a command provided in the the Bluetooth HCI protocol versions 1,2 and higher. The value thus read from the hardware can then be attached to each data item before it is transmitted.

However, this second method has a problem that some delay inevitably arises due to the time taken to communicate with the Bluetooth hardware. A further disadvantage is that the clock must be read for each data item, which is an inefficient use of the resources of the Bluetooth hardware.

In view of this, it is an object of the invention to allow the transmission of time-stamped data with a more efficient use of hardware resources.

According to a first aspect of the present invention, there is provided an apparatus for transmitting data by radio to a receiver, the apparatus comprising:
a controller, the controller comprising:
   an input for inputting data;
   a local clock forming part of a phase locked loop adapted to be synchronised at predetermined intervals to a master clock signal; and
   a time stamp circuit adapted to add time stamp data representing the value of the local clock to the data to form time stamped data;
the apparatus further comprising a transmitter circuit adapted to receive the time stamped date from the time stamp circuit and to transmit the time stamped data by radio to the receiver.

A Phase Locked Loop (PLL) is used to ensure that a local clock remains in synchronism with a master clock signal. By using a PLL, it is not necessary to read the master clock for every data item transmitted. Instead the master clock can be read less often and the local clock used to provide time stamp data. This allows a more efficient use of hardware resources. As a further benefit, the integrating effect of the PLL means that any error between the local clock and the master clock will tend towards zero over time. The problem of inaccuracy and delay when directly reading the master clock is therefore reduced.

The controller further comprises a comparator for determining the error between the local clock and the master clock signal, and wherein the controller is adapted to set the value of the local clock to the value of the master clock signal when the comparator determines that the error exceeds a predetermined threshold amount. The comparator allows a check to be made on the accuracy of the local clock, and for the local clock to be corrected to the value of the master clock when the error has a given magnitude. This means that any significant drift in the local clock can be corrected easily.

Preferably, the apparatus further comprises a receiver circuit adapted to receive the master clock signal by radio. This allows a number of transmitters to be easily synchronised to the same master clock signal.

The receiver circuit can be further adapted to receive time stamped data transmitted from another apparatus. Thus, the apparatus can be utilised as a transmitter for time stamped data or a receiver for time stamped data depending on what is required in use.

In one advantageous embodiment, the transmitter circuit and the receiver circuit are combined in a transceiver circuit. This can result in a simpler construction and reduced cost.

Preferably, the transmitter and receiver are compliant with the Bluetooth HCI protocol version 1.2, and the master clock signal is the Bluetooth piconet master clock. The Bluetooth HCI protocol is standardised and is publically available on the internet at www.bluetooth.org/spec. The operation of devices over a Bluetooth piconet is controlled with relation to a piconet master clock. The Bluetooth HCI protocol version 1.2 and above allows this to be read directly from the Bluetooth hardware. Bluetooth hardware is commercially available from a number of sources and allows implementation of the transmitted and receiver in a cost-effective manner. A further advantage is that Bluetooth hardware has low power consumption requirements, making it especially suitable for mobile devices.

Preferably, the predetermined interval is in the range of 100 ms to 200 ms, more preferably approximately 160 ms. An interval of this length is sufficient to ensure that the PLL remains accurately synchronised and minimises the usage of hardware resources to read the master clock.

Preferably, the threshold amount is equal to one cycle of the master clock. In use several master clock cycles are likely to elapse between the transmission of each item of data. Therefore by setting the threshold to one cycle of the master clock, the accuracy of the local clock is maintained within an acceptable limit in the event of any drift occurring in the local clock.

Preferably, the controller is a Programmable System on Chip. A Programmable System on Chip (PSoC) contains both analogue and digital circuit elements in a single package. It therefore allows a cost effective implementation of the controller including the PLL and local clock circuit.

Preferably, the phase locked loop comprises a local oscillator contained within the Programmable system on chip. Typically the PSoC package will include a low accuracy internal oscillator. However, this is sufficient to operate the PLL because the action of the PLL will improve the accuracy. Using an oscillator within a PSoC further reduces the cost and allows a smaller apparatus to be produced.

In an alternative embodiment, the phase locked loop comprises a crystal-reference oscillator. A crystal-reference oscillator is less prone to drift and therefore reduces the effect of drift on the accuracy of the PLL.

Preferably, the phase locked loop is implemented by a combination of software and hardware. This allows the performance of the PLL to be optimised. For example, the oscillator could be provided in hardware and the comparator in software. Also, by implementing part of the PLL in software, the design of those parts of the PLL can easily be changed according to the design requirements of a particular application.

According to a second aspect of the invention, there is provided a wireless sensor for remote telemetry, the sensor comprising:
an apparatus as described above in relation to the first aspect of the invention; and
at least one sensing circuit connected to the input of the controller.

A simple to construct, cost-effective wireless sensor can therefore be achieved. The sensor can transmit accurately time stamped data and is well suited to use in mobile applications, such as a sensor intended to be attached to the human body. The sensor can include more than one sensing circuit. In that case the output of each sensing circuit can be transmitted over the same wireless link using a single transmitter, rather than one for each sensing circuit.

The sensing circuit can be a heart rate sensor or a breathing rate sensor.

According to a third aspect of the present invention, there is provided a wireless telemetry system comprising:
at least one wireless sensor according to the above described second aspect of the invention; and
a base station for receiving data from the at least one wireless sensor. All the wireless sensors can be synchronised to a single master clock signal. Therefore all the data can be accurately placed in time, and data from more than one sensor can be accurately related in time.

The base station can itself be a wireless sensor which contains a receiver for time stamped data.

According to a fourth aspect of the present invention, there is provided a method of transmitting data by radio, the method comprising:
synchronising a local clock to a master clock signal at predetermined intervals using a phase locked loop;
adding time stamp data representing the value of the local clock to the data to form time stamped data; and
transmitting the time stamped data by radio.

The step of synchronising further comprises:
determining the error between the local clock and the master clock signal; and,
setting the local clock to the value of the master clock signal in the event that it is determined that the error between the local clock and the master clock signal exceeds a predetermined amount.
Using a phase locked loop allows the local clock to be accurately synchronised to the master clock while maximising the intervals between reading the master clock. Consequently there is a more efficient use of resources.

Preferably, the method further comprises the step of receiving the master clock signal by radio.

Preferably, the predetermined intervals are in the range of 100 ms to 200 ms, preferably 160 ms.

Preferably, the predetermined amount is equal to one period of the master clock signal.

Embodiments of the invention will now be described by way of example only with reference to the accompanying drawings, in which:
Figure 1 is a diagrammatic representation of a wireless sensor network according to a first embodiment of the present invention;
Figure 2 depicts a block diagram of a base station for use in the first embodiment;
Figure 3 depicts a block diagram of an ECG sensor for use in the first embodiment;
Figure 4 depicts a block diagram of a PSoC for use in the ECG sensor of Figure 3;
Figure 5 depicts a schematic diagram of one embodiment of the ECG sensor of Figure 3;
Figure 6 depicts a block diagram of a respiration sensor for use in the first embodiment;
Figure 7 depicts a block diagram of a PSoC for use in the respiration sensor of Figure 6;
Figure 8 depicts a schematic diagram of one embodiment of the respiraction sensor of Figure 6;
Figure 9 depicts the time stamping principle in relation to a packet of data;
Figure 10 depicts a block diagram of the use of Bluetooth clocks in the first embodiment;
Figure 11 depicts a block diagram of the PLL principle used to synchronise local clocks in the first embodiment; and
Figure 12 depicts a flow chart of a hardware interrupt routine for use in the first embodiment.

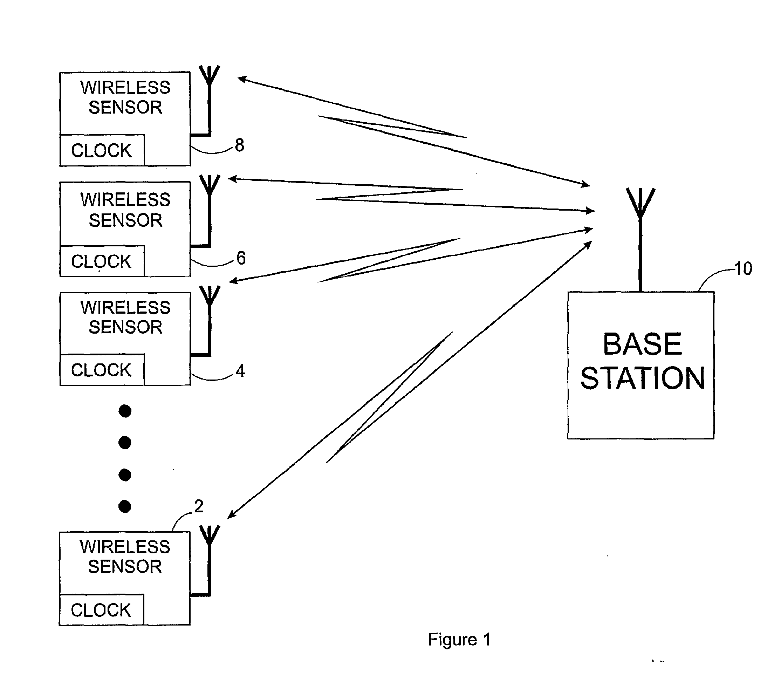

A diagrammatic representation of a telemetry system according to a first embodiment of the present invention is depicted in Figure 1. A plurality of sensors 2, 4, 6, 8 transmit data to a base station 10 which collates and processes the received data.

Each sensor 2, 4, 6, 8 includes a clock. All the clocks are synchronised to a master clock signal which is broadcast from the base station 10. A more detailed description of the operation of the clocks within the sensors and the way in which they are synchronised is given later. When sample data is transmitted from a sensor time stamp data from the clock is added to the sample data before transmission. This allows the base station 10 to accurately place the time of the sample data even if there is a delay in transmission or if sample data is received in the wrong order. It also allows the time of sample data from each sensor to be known relative to data received from other sensors.

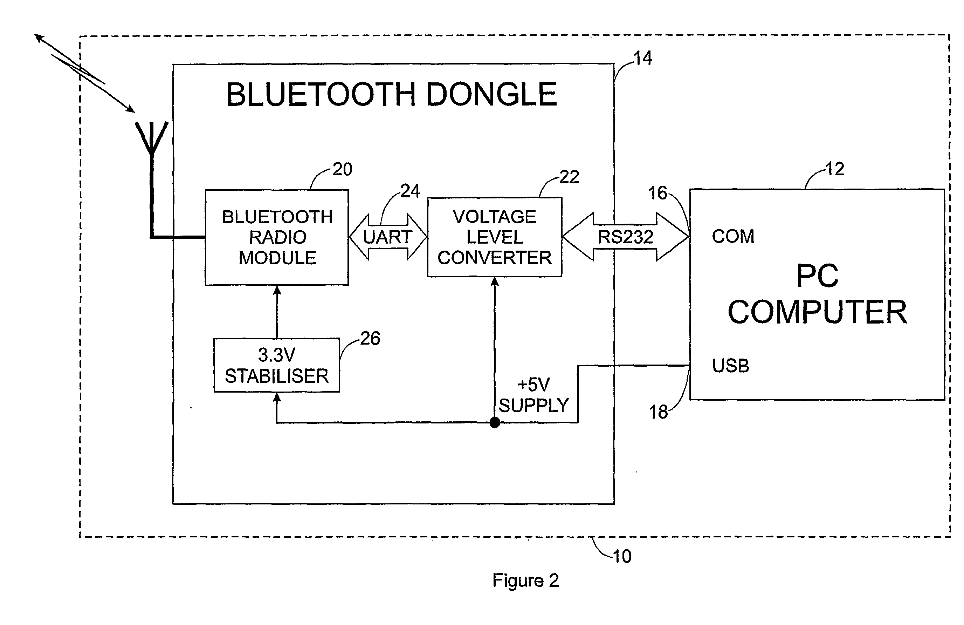

In this embodiment the method of wireless transmission utilises the Bluetooth HCI protocol version 1.2 or above. Figure 2 depicts a block diagram of the base station 10. The base station 10 comprises a general purpose computer 12 having a commericially available Bluetooth hardware adaptor 14. The Bluetooth hardware adaptor 14 can be either connected to the computer 12, for example by a serial or USB connection, or built into the computer itself, for example on an internal expansion card such as a PCI card, PCMCIA card, or CF card or directly integrated on the motherboard of the computer 12.

In this embodiment a serial Bluetooth adapter 14 is used which is connected to an RS232 serial port 16 and is powered by a connection to a USB computer port 18 for supply of a +5V power supply. Communication with the Bluetooth adapter 14 uses the H4 section of HCI Bluetooth specification.

The Bluetooth adapter 14 itself comprises a Bluetooth radio module 20, a voltage level converter 22 and a UART 24 to convert serial data into parallel data. The Bluetooth radio module 20 requires a 3.3 V volt supply and therefore a 3.3V stabiliser 26 is provided to supply 3.3V to the Bluetooth radio module 20.

Alternative embodiments of Bluetooth hardware, other than that shown in Figure 2 can also be used, depending on the particular Bluetooth adaptor which is used.

The sensors 2, 4, 6, 8 can be of a variety of types, including heart rate sensors or breathing rate sensors. The sensors may all be attached to a single subject to be monitored or alternatively several subjects may be monitored at the same time.

The detailed construction of a heart rate sensor and a breathing rate sensor for use in this embodiment will now be described.

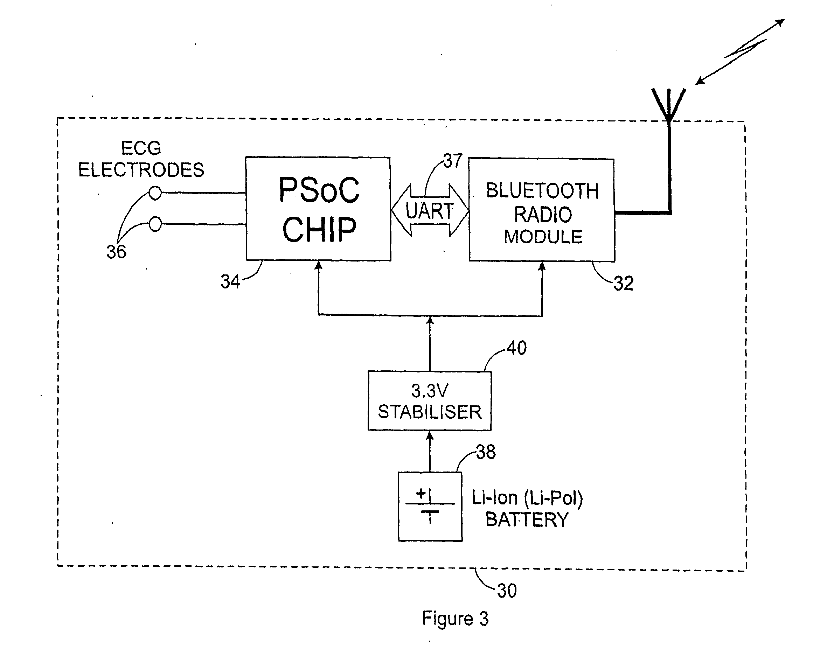

A block diagram of a heart rate or ECG sensor 30 is depicted in Figure 3. The sensor 30 comprises a commercially available Bluetooth radio module 32 which is connected to a PSoC 34 via a UART 37 to convert parallel data into serial data. The PSoC 34 has inputs connected to a pair of ECG electrodes 36. The sensor is powered by a Lithium Ion rechargeable battery 38 which is connected to a 3.3V stabiliser 40 to ensure that a stable 3.3V supply is delivered to the PSoC 34 and the Bluetooth radio module 32. Other power sources such as Nickel Cadmium, Nickel Metal Hydride, or Lithium polymer batteries can also be used. Lithium Ion or Lithium Polymer is preferred.

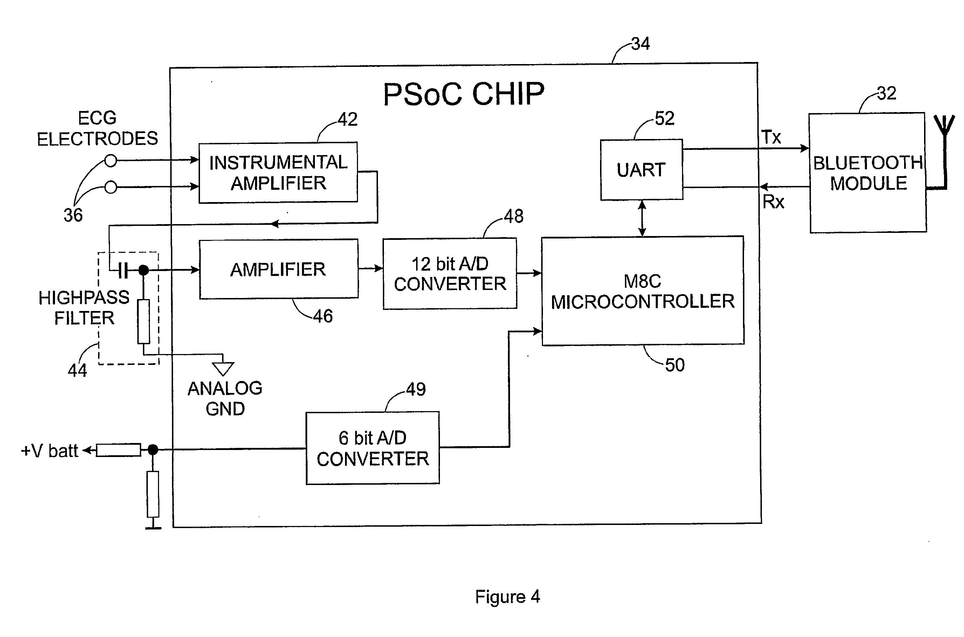

Figure 4 depicts a block diagram of the internal configuration of the PSoC 34 used in the ECG sensor 30. The PSoC 34 is an advanced solution which can contain both analogue and digital circuits in a single silicon chip, reducing the dimensions, manufacturing complexity and cost.

The analogue components implemented in the PSoC 34 comprise: an ECG preamplifier 42 (which can also be an instrumental operating amplifier); a RC highpass filter 44; a second stage amplifier 46, 12 bit sigma-delta A/D converter 48; a 6-bit successive approximation A/D converter 49 which is used for battery voltage measurement.

The digital components implemented in the PSoC 34 comprise: an 8 bit M8C Harvard Architecture microcontroller 50; a UART interface 52; an adjustable clock divider and other auxiliary digital blocks (the clock divider and related digital blocks are not depicted in Figure 4, their construction and function will be explained in more detail later).

The onboard M8C microcontroller is configured to perform the following multiple tasks in real-time:
1. It controls the configurable analogue circuits including the A/D converters 48 and 49.
2. It controls communication with the Bluetooth module 32 using bi-directional HCI packet exchange via the UART 52
3. It carries out real-time analysis of the measured ECG signal from the electrodes 36 to calculate its parameters. These parameters include R-R intervals (the instantaneous heart rate) and the ECG signal itself.
4. It maintaining the PLL loop for clock synchronisation. (The PLL loop function will be described in more detail later.)

In this embodiment the Bluetooth module 32 is any commercially available Bluetooth module such as the PBA 313 07. This uses a standard UART 52 (Receive and Transmit lines only) as a physical interface to the host microcontroller 50 for exchange of data conforming to the HCI protocol.

No additional components for interfacing are needed between the PSoC 34 and Bluetooth module 32, since the PSoC 34 can operate with the same (3.3 V) supply voltage as the Bluetooth module 32 itself and thus a compatible interface voltage level is secured.

The input/output data and control commands for customising the behaviour of the Bluetooth module 32 are normally sent to and from the Bluetooth module 32 via the so called HCI interface (Host Control Interface). This is usually implemented as an UART port commonly used by embedded microcontrollers, and this is the case in this embodiment.

This HCI protocol is an industry standard which is publically available. Any Bluetooth module from any manufacturer must conform to the HCI protocol. Therefore by using the HCI protocol it is possible to use a Bluetooth module from any manufacturer.

The HCI protocol allows full control of the Bluetooth module and full utilisation of all capabilities of the Bluetooth technology. This includes customisation of data throughput, choice of data encoding/encryption, multipoint communications, networking, dynamically changing wireless network and multiple Bluetooth network interoperability.

The basic task of the HCI controlling firmware in the PSoC 34 is generation of the "HCI command" packets, sending of data packets (both asynchronous and synchronous), listening and evaluating the (HCI events) packets which are sent backward from the Bluetooth module 32 to the microcontroller 50 and receiving the incoming data packets from the Bluetooth module 32. The most critical part of such communication firmware programming is to ensure that any incoming HCI packets are not missed (thereby providing relatively high speed data exchange) while the microcontroller 50 is engaged with sending packets, evaluating packets or data acquisition tasks. This is solved in this embodiment by an interrupt service routine (ISR) which must be carefully programmed with regards to other interrupt services (with different priorities) especially when they are servicing the real-time data acquisition and processing tasks.

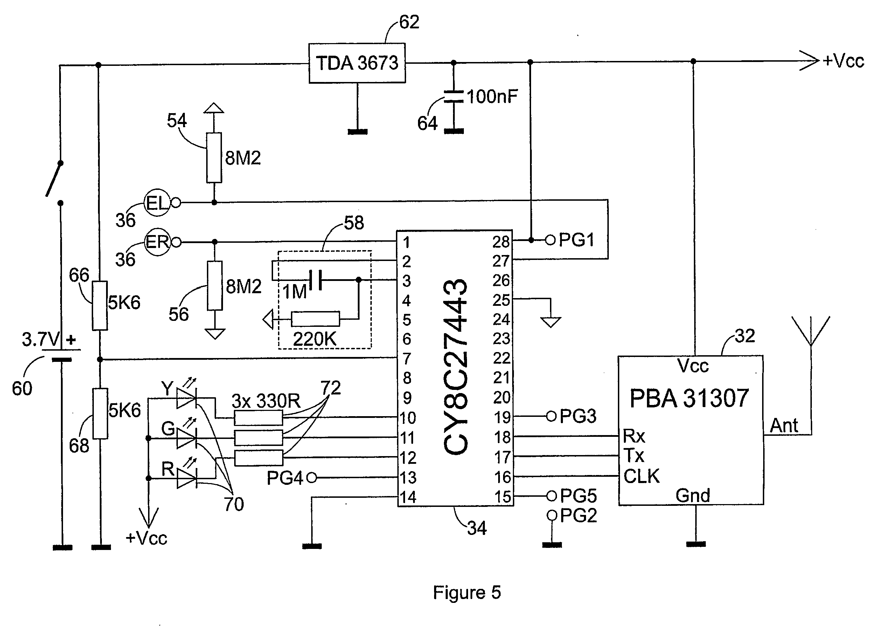

A schematic diagram of one implementation of the ECG sensor is depicted in Figure 5. The ECG signal from the electrodes 36, is passed directly to the PSoC 34 where it is amplified by an instrumental operating amplifier using a gain of 16. The resistor 54, 56 serve as a DC bias for the instrumental amplifier input.

The amplified ECG signal is filtered by an external high pass filter 58 which has a cut-off frequency of approximately 0.7 Hz to remove any DC component and electrical baseline drift. The filtered signal is amplified in the PSoC 34 in the second stage amplifier to effectively match the following A/D converter input range. In this embodiment the PSoC is a CY8C27443 chip.

All hardware is powered by a single Li-Pol (Lithium-Polymer) rechargeable battery cell 60. A 3.3 V voltage stabiliser 62 (a TDA 3673 voltage stabiliser is used in this embodiment) together with a blocking capacitor 64 is used for both the PSoC 34 and Bluetooth module 32 power supply (a PBA 31307 Bluetooth module is used in this embodiment). The resistor divider formed by resistors 66, 68 is used for measuring the battery voltage. It divides the voltage of the battery 60 by a factor of 2, because the typical battery voltage is in the range of 3.5 V to 4.2 V and therefore cannot be directly connected to the PSoC 34 while the PSoC 34 is powered by 3.3 V.

Three LEDs 70, together with their serial resistors 72, are to provide a visual indication of the status of the sensor. When a Green LED is lit, the status is indicated as "Ready", when a red LED is lit, the status is indicated as "Connected", and when a yellow LED is lit, the status is indicated as "Heatbeat".

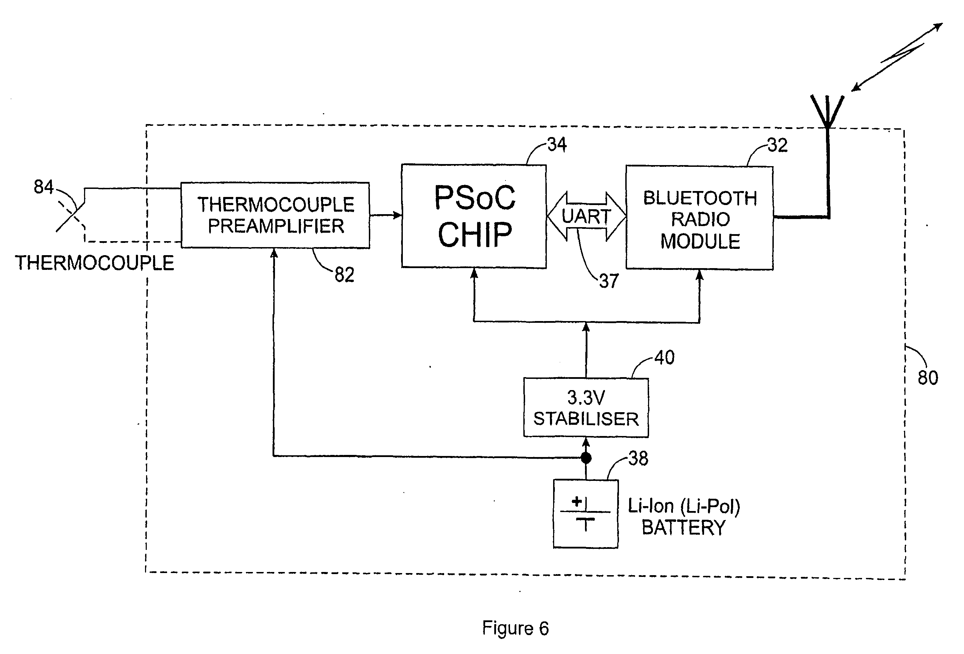

The construction of a respiration sensor for use in the telemetry system will now be described. The respiration sensor can measure the respiration rate and the interval between breathing events (the B-B interval). A block diagram of the construction of the respiration sensor 80 is depicted in Figure 6. It can be seen the construction is similar to that of the ECG sensor 30. However, the ECG electrodes 36 in the ECG sensor 30 are replaced by a thermocouple preamplifier 82 and a thermocouple 84 in the respiration sensor 80.

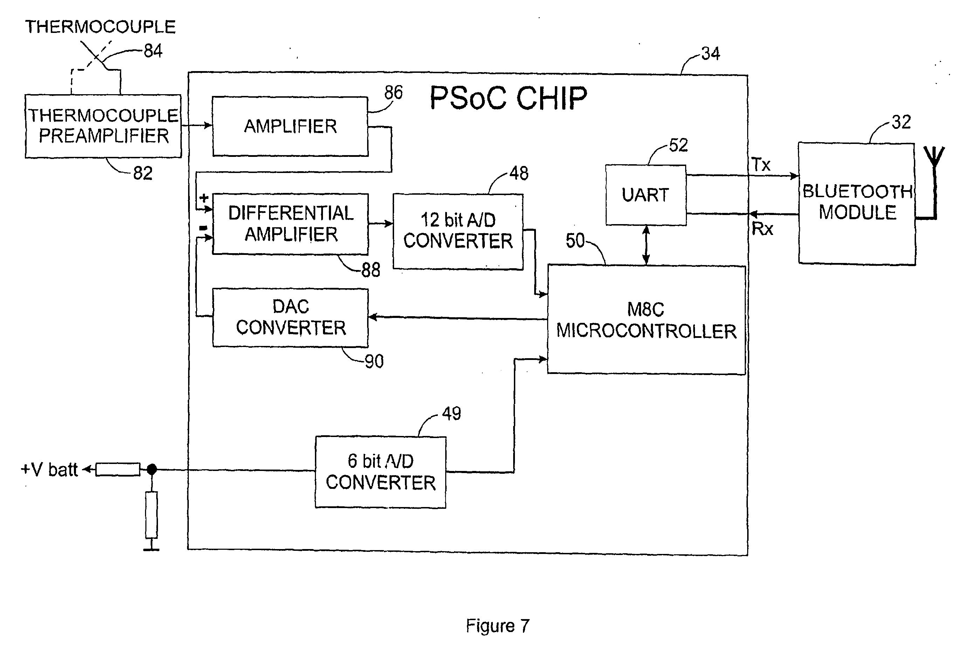

Figure 7 depicts a block diagram of the configuration of the PSoC 34 for use in the respiration sensor. It can be seen that it is similar to the configuration of an ECG sensor, but differs in the provision of an amplifier 86 to amplify the output of the thermocouple pre-amplifier 82. The output of amplifier 86 forms one of the inputs to a differential amplifier 88. The other input supplied by the microcontroller 50 via a digital-to-analogue converter 90. The differential amplifier 88 is used to remove the DC component of the signal.

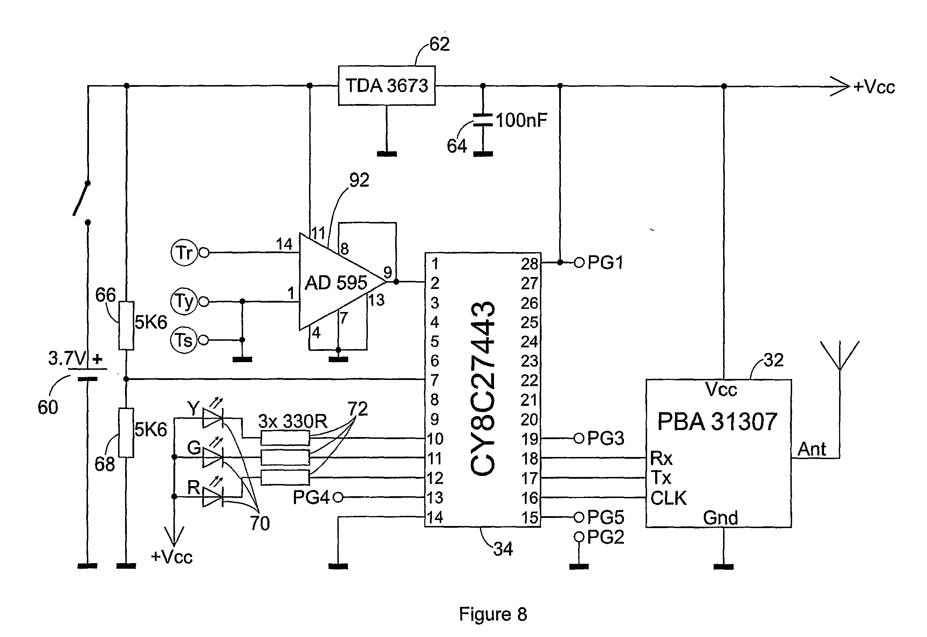

A schematic diagram of one implementation of the respiration sensor is shown in Figure 8. Once again the similarity to the ECG sensor can be seen. A thermocouple based respiratory sensing method is used which requires an additional specialised thermocouple handling IC 92 (an AD595 in this embodiment). It is also possible to connect the thermocouple sensor 84 directly to the PSoC 34. However using the specialised IC 92 gives better performance and in particular a better signal-to-noise ratio. The high pass RC filter of the ECG sensor is not needed in this respiration sensor because the DC component is removed by the differential amplifier in the PSoC 34.

As can be seen from Figures 5 and 8, the ECG and Respiration transmitters schematic diagrams are similar and could be even absolutely identical in alternate embodiments of many different types of sensors. Completely different functionality can be achieved by changing the firmware only if required.

It is therefore possible to manufacture general purpose hardware boards in high volumes to benefit from economies of scale. The hardware boards can then be programmed (or even dynamically reprogrammed) for particular applications without requiring any changes to the hardware manufacturing line.

It is also possible to remotely or wirelessly change the structure and functionality of such a general purpose sensor when it is in situ by sending appropriate commands to it via the Bluetooth modules.

The principle of adding time stamps to data transmitted from the sensors, and the way in which clocks for the time stamps are synchronised will now be explained.

As was mentioned above, asynchronous digital data transfer as is typically used by all modem digital wireless technologies does not guarantee the regular delivery of the data samples as collected at the sensor to the base station 10. This is a result of the use of packet methods to transfer data transfer of the re-transmission of packets as necessary in order to maintain a reliable data link.

In this embodiment a Bluetooth link is used. The Bluetooth asynchronous link is considered to be a "reliable" link because corrupted packets are retransmitted many times until they are received correctly. This is a good solution for bundled types of data, where all data is transferred correctly at the expense of transfer time duration.

However, this presents a problem for the real-time telemetry data generated by the sensors. This data is "isochronous" in its nature, i.e. the samples to be transferred are generated at regular time intervals continuously. When errors result in a large number of retransmissions, this will cause link congestion and possible loss of or delay to data of some samples. When this occurs data received by the base station can still be used but there is a problem in how to assign the particular received samples to the time axis when the "time gaps" occur between continuous data segments.

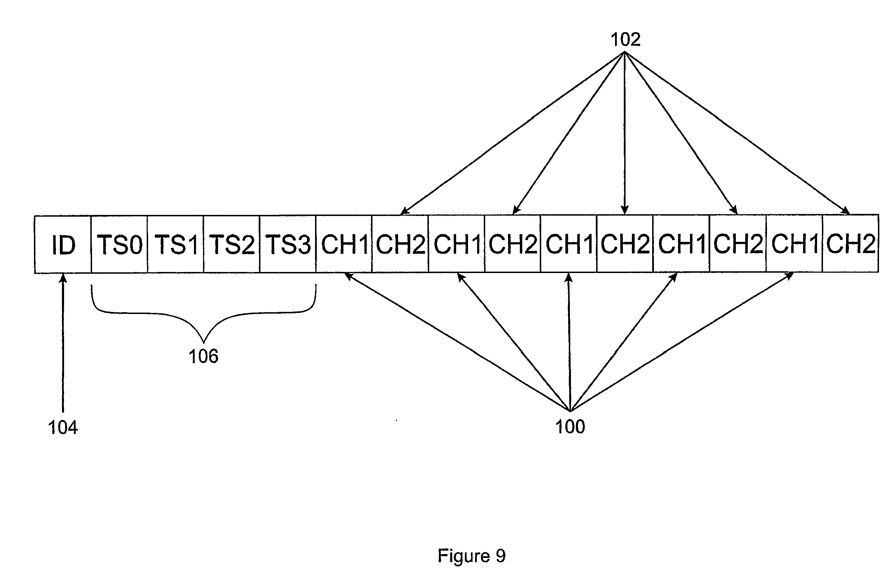

All these problems can be resolved by "time stamping" of the real-time collected data. It means that every sample (or samples batch) collected from a particular remote point, is given time information determining the sample point on a known time axis. In the case of packet digital data transfer, it is clear that the time relationships among samples contained in one particular packet is always maintained, so that the time stamp can be applied for the whole packet data only. Figure 9 depicts the use of a time stamp in when a packet contains samples 100 from a first sensor and samples 102 from a second sensor. The packet begins with a packet ID 104 followed by a 32-bit time stamp 106 and the data 102, 104 from the two sensors.

This principle is also valid when data is collected from multiple sensors (if there are multiple channels) providing that they all are transferred by the same wireless transmitter (i.e. the same Bluetooth module). This is because all time relationships between channels are exactly known on the transmitting side and they are reflected in the packet format structure, regardless of the packet delivery time variations. Time stamping of data packets overcomes both the transfer time lag irregularity and partial data loss problems to ensure that the data is correctly aligned to the absolute time axis.

This principle works for point-to-point wireless links, but there is a clock synchronisation problem when multipoint telemetry is desired as is used in the present embodiment and depicted in Figure 1. In such cases of multipoint data collection, it is not possible to synchronise the data samples into one common time axis without knowledge of the particular time stamping clocks phases of each transmitter.

The problem of synchronising the clocks of each sensor can be solved if a master clock signal is provided and can be received all the sensors. In the present embodiment, Bluetooth hardware is used which provides a master clock signal. A Bluetooth piconet (containing one master and up to seven slaves) must be always synchronised i.e. all active slaves must adjust their own local clocks to be synchronised with the master Bluetooth clock.

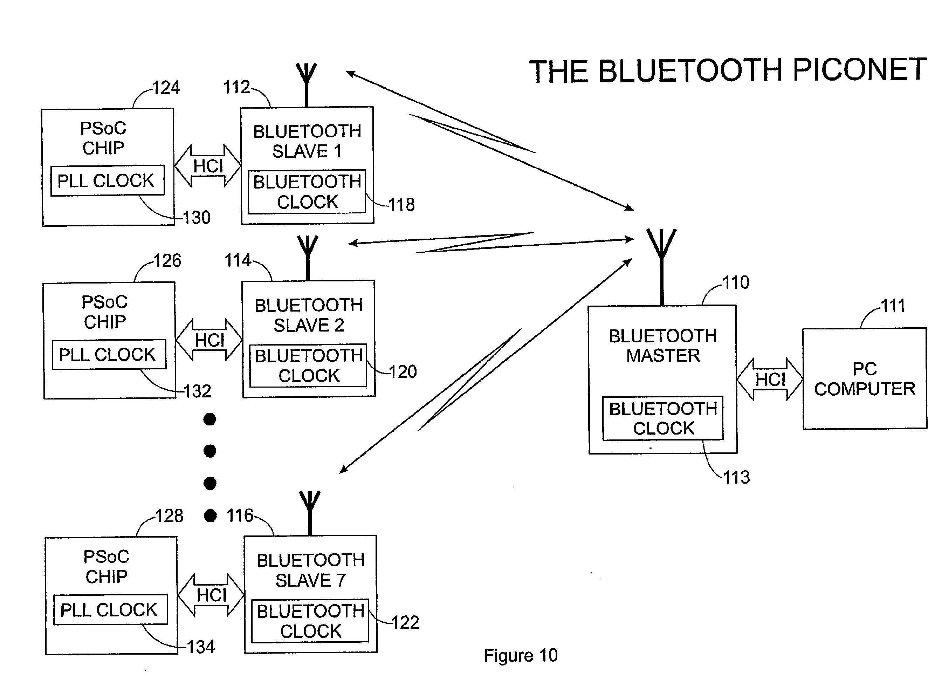

Figure 10 depicts the use of Bluetooth clocks in this embodiment of a wireless telemetry system. A Bluetooth master device 110 is connected to the base station computer 111. The Bluetooth master device 110 transmits a master clock signal governed by a master clock 113 which can be received by the Bluetooth devices 112, 114, 116 in the sensors. These Bluetooth devices 112, 114, 116 function as slaves. The local bluetooth clocks 118, 120, 122 in the slave Bluetooth devices 112, 114, 116 are free running. Each Bluetooth device 112, 114, 116 continuously maintains the clock difference or clock offset between its local clock 118, 120, 122 and the remote master clock 113 by means of the low level or physical layer Bluetooth radio module resources.

Versions 1.2. and above of the Bluetooth HCI specification provide an HCI command which allows both the local and remote (master) current Bluetooth clock state to be read. Therefore, every microcontroller within the PSoC 124, 126, 128 of the sensors, which is connected to the Bluetooth module 112, 114, 116 using an HCI protocol, can read the remote master Bluetooth clock which represents the common time axis for all telemetry channels.

Although it is possible to read the remote master clock 113 via the HCI protocol as described above and use this information for packet time stamping directly this can cause additional problems. There are limited possibilities to access the remote master clock information due to the relatively heavy traffic on the HCI interface (the clock reading commands/events must be multiplexed with other HCI packets particularly with the payload data traffic).

Another disadvantage is that using the master clock directly sometimes causes small "jumps" in the time axis. This is typical when the master clock status is readjust "on the edge" when the master clock counter is near to its incrementing moment. This can create a jump rather than a smooth increment.

In this embodiment a convenient solution for precise synchronisation of multipoint wireless channels telemetry is presented. A local clock 130, 132, 134 is provided in every transmitter. The local clock 130, 132, 134 is contained inside the local hardware and is accessible by the local microcontroller at any time. It runs synchronously with the master Bluetooth clock by the provision of a PLL (Phase Locked Loop) principle.

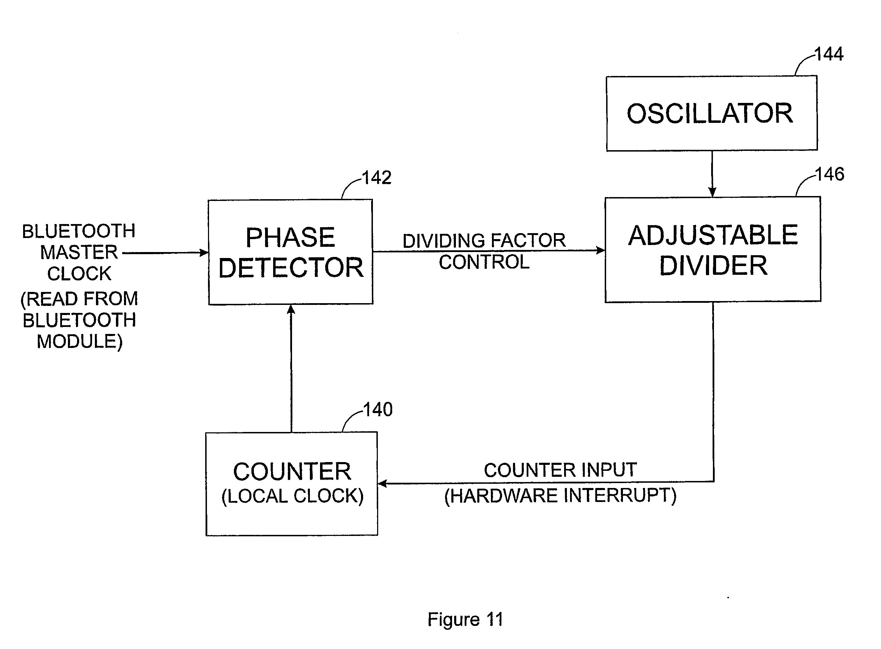

A block diagram of the PLL principle used in each transmitter is depicted in Figure 11. The PLL principle overcomes not only the problem of limited access to the remote master clock information (which is available in some time intervals only) but provides a further advantage of enhancing the precision of the sample timing and synchronisation provided by the local clocks.

Reading the Bluetooth clock current state via the HCI command is still associated with some small error. The error is caused both by the clock counter incontinuity and the transport delay through the HCI channel. All these inaccuracies can be thought of as "noise" which can be successfully suppressed by the PLL because of its integrating effect.

A further benefit is that a low precision oscillator (possibly integrated directly within the microcontroller or PSoC) can be used in the transmitter hardware. The effect of the PLL will enable a low precision oscillator to reach a high clocking accuracy because it is locked to the precise master Bluetooth clock which transmits the master clock signal. Often the master clock will be crystal controlled and possibly also temperature compensated. Use of a low precision oscillator in the sensor hardware enables the manufacturing cost to be reduced.

The basic principle of the PLL loop shown in Figure 11 lies in the control of the local clock timing (control of the counter input clock frequency) in such a way that the difference between this local clock state and the Bluetooth remote master clock state would be zero.

This PLL loop of Figure 11 is implemented by a combination of both hardware and software resources. A Local Clock counter 140 and a Phase Detector 142 are implemented in software whilst an Oscillator 144 and an Adjustable Divider 146 are hardware implemented.

One notable difference from typical PLL implementations is that no VCO (Voltage Controlled Oscillator) is used in this embodiment. Instead, the fixed frequency oscillator 144 and adjustable or programmable divider 146 are used instead. This solution is more suitable for PSoC based hardware because a fixed frequency (24 MHz) internal trimmed oscillator is integrated in the chip already and a programmable divider is easy to build from the digital blocks available in the PSoC.

The Local Clock 140 is implemented by software as a 32 bit variable which is incremented every Bluetooth Clock (0.625 msec) by a hardware interrupt, generated by the output of the Adjustable Divider 146. The local clock 140 can therefore run for more than 24 hours without an overflow event occurring. Thus the Local Clock 140 is virtually driven by a frequency generated by the Adjustable Divider 146.

The Phase Detector 142, which is implemented by a software routine, reads periodically the remote master Bluetooth clock (once per 160 msec) and compares it with the current state of the Local Clock 140. The dividing factor of the adjustable divider 146 is then increased, decreased or kept unchanged depending on the phase of the Local Clock 140, relative to the desired state, to keep the Local Clock 140 synchronised to the Master Bluetooth Clock.

The PLL principle applied to the Bluetooth synchronisation problem provides a smoothly running Local Clock 140 generator even when the remote Master Clock information obtained from the HCI channel is "noisy".

If the Remote Clock information is directly used, for example just transcribed into a particular variable, then all Master Clock irregularities appear in the Local Clock time scale. However, using the PLL technique smoothes the Local Clock time scale which is obtained due to the integrating, or flywheel, effect of the PLL. This improves both the sample timing and multi-channel (multipoint) sample synchronisation quality.

As described above, the Local Clock 140 is implemented by software in the form of a 32 bit variable which is incremented during the hardware interrupt service routine. This hardware interrupt is generated every 625 µsec by the output of the adjustable Divider 146.

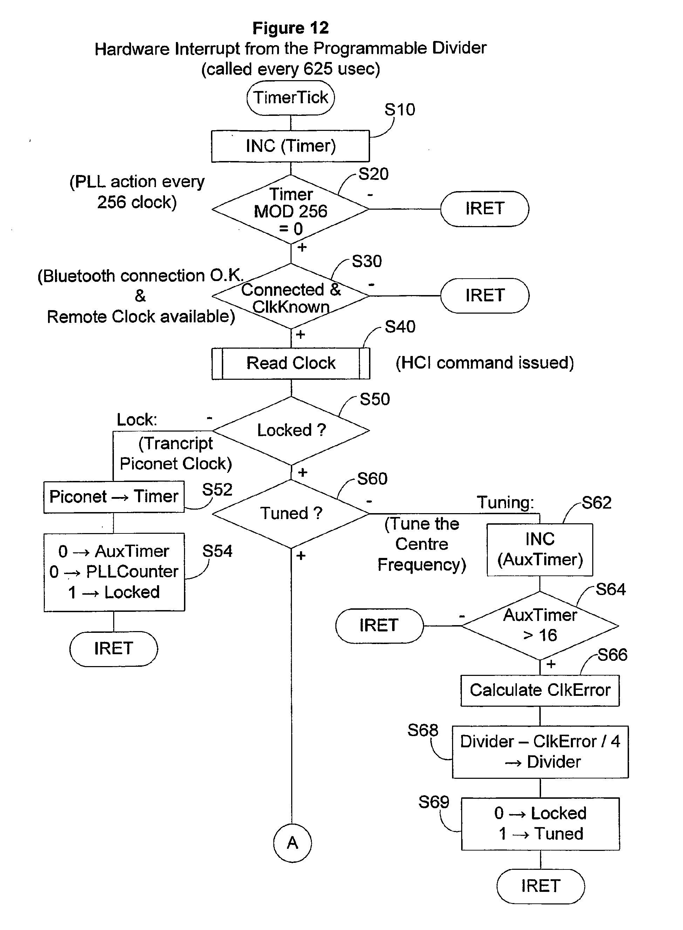

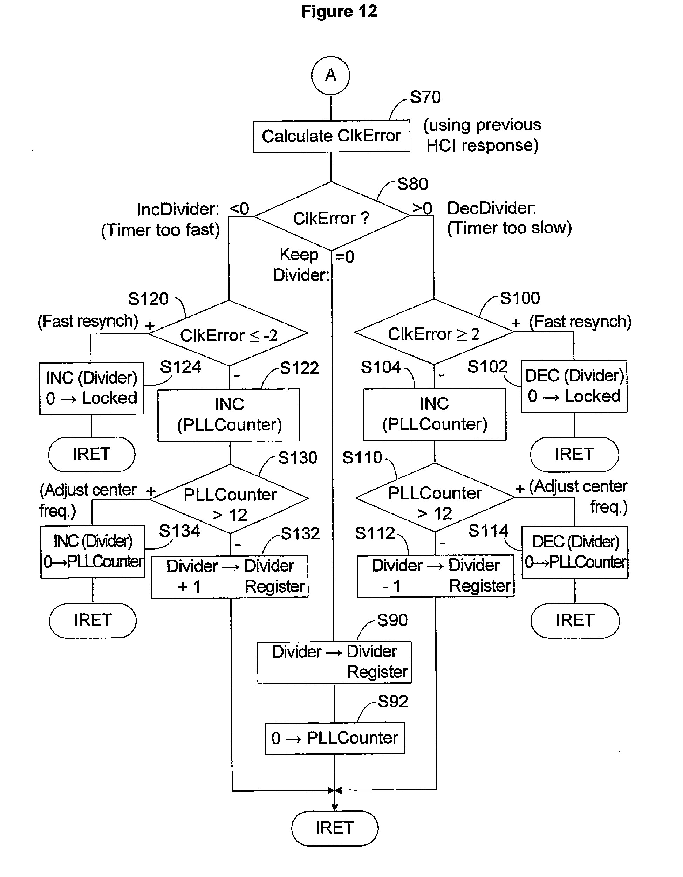

Figure 12 depicts a flow chart of the hardware interrupt for the programmable divider. This interrupt is called every 625 µsec.

The Local Clock is held in a variable called Timer which is incremented in step S10 during every ISR calling (@ 625 µsec). Execution then proceeds to step S20 where it is determined whether a PLL action should be performed. A PLL action is performed every 256th Bluetooth clock which corresponds to 160 msec (256 * 0.625 = 160). If step S20 determines that a PLL action should be performed execution proceeds to step S30, otherwise execution terminates to await the next interrupt.

In step S30 it is determined whether a Bluetooth connection has been established and whether the Bluetooth master remote clock value has been read already. A variable *Connected* is set to a value of 1 when a Bluetooth connection is established and a variable *CLKKnown* is set to value of 1 if the Bluetooth master remote clock has been read already. Provided both *Connected* =1 and *CLKKnown =* 1 execution proceeds to step S40, otherwise execution terminates to await the next interrupt.

If a Bluetooth connection is successfully established, the remote Bluetooth master clock (or reference clock) state is periodically read every 160 msec in step S40 in described ISR by issuing of an HCI_Read_Clock command packet through the HCI protocol. (The 160 ms interval occurs because execution only proceeds to step S40 once every 160 ms due to the action of step S20.) The corresponding response (i.e. the Command_Complete event) is captured from the HCI backward traffic (events) in the UART receiver's ISR and the Piconet variable is then updated by the remote master clock value returned.

Execution then proceeds to step S50 which checks for the status of a variable called *Locked.* If this variable has a value of 1 it is determined that the PLL is locked and execution proceeds to step S60. Otherwise execution proceeds to step S52.

In step S52 the known remote master clock (stored in a variable called *Piconet*) is transcribed into the *Timer* variable. This action forces the Local Clock to match the remote master (reference) clock and the PLL algorithm starts to keep the synchronisation from now on (PLL is locked). Execution proceeds to step S54 where a variable *AuxTimer* and a variable *PLLTimer* are both set to zero. Also in step S54 Locked is set to a value of 1. Execution then terminates to await the next interrupt.

In step S60 it is determined whether the PLL is tuned by the status of a variable called *Tuned.* If this has a value of false (in the algorithm initial state) the automatic compensation procedure of local oscillator frequency error is performed in steps S62 to S69. This is due to use of the low precision local oscillator (integrated on the PSoC, with a frequency precision of +/- 2.5 % i.e. 25000 ppm error) for PLL timing. Otherwise execution proceeds to step S70.

In steps S62 to S69, first, the frequency error is measured in the tuning procedure in step S66, by checking the Local Clock phase drift during a time interval of 2 seconds duration (*AuxTimer* variable is used for timing) while the Programmable Divider is set to the default dividing rate of 15,000 (expecting the exact local oscillator frequency to be 24.000000 MHz).

Then a new dividing factor is calculated in step S68, placed into the *Divider* variable and used as the default dividing factor, giving a new default centre frequency for PLL control. The *Locked* flag is set to the false state in step S69, thus erroneous Local Clock value will be replaced by the current one and the PLL operation will start in the next algorithm pass.

Using this tuning algorithm at the beginning of the synchronisation process is capable of reducing the oscillator initial frequency error of +/- 25 000 ppm down to a figure of about 250 ppm. This is more acceptable for the PLL algorithm. In an alternate embodiment using an external crystal controlled oscillator this part of synchronisation algorithm is not required.

When the synchronisation algorithm is in a steady state, the PLL error (difference between the Local Clock and the Remote Clock) is determined in every algorithm pass in step S70. This is done simply by reading the *Piconet* variable which contains the value of the remote master clock, returned by the Bluetooth module as a response to the HCI_Read_Clock command issued in the previous algorithm pass. Because this clock reading command is always issued in the time instant when the Local Clock (*Timer* variable) lowest byte is zero (expressed by the formula: *Timer* MOD 256 = 0 ) then reading the Piconet lowest byte provides us with the information about the phase error. It means that when the Local Clock is running too slow the lowest byte of the remote clock (*piconet* variable) will be read as a positive value because of the remote clock and vice versa.

In Step S80 the PLL error (*ClkError* variable) state is evaluated and one of the following actions is performed:
1. If *ClkError =* 0 Restore the default dividing factor in step S90 (necessary if frequency is shifted as a result of previous PLL action).
2. If *ClkError >* 0 The Timer is too slow, so its input frequency needs to be increased (dividing factor of programmable divider should be decreased). This is carried out by steps S100 to S114.
3. If *ClkError* < 0 The Timer is too fast, so its input frequency needs to be decreased (dividing factor of programmable divider should be increased). This is carried out by steps S 120 to S 134.

In the steady state, when the PLL error does not exceed +/- 1 of the the Bluetooth clock (i.e. +/- 0.625 msec) the Programmable Divider control register is filled by the default (centre) value contained in the *Divider* variable increased (Step S132) or decreased (Step S 110) by one while keeping the centre frequency in *Divider* variable unchanged. This causes very gentle changes (about 66 ppm) of Local Clock driving pulses frequency, assuring smooth Local Clock synchronisation.

However, the low precision on-chip integrated oscillator (being advantageous because it does not need any external components) suffers from temperature and voltage drift, so a frequency shift more than 66 ppm can easily occur in practice, which can not be eliminated in the above described centre frequency temporary shifting (increase/decrease dividing factor by one).

In order to eliminate this problem, additional branches are added in the synchronisation algorithm. If the local oscillator is drifting, the PLL error is deflected to either the positive or negative side for longer time periods. That is why *PLLCounter* variable is used in the method, which is incremented every time when the PLL error is deflected to the positive or negative side (in steps S104 and S122, respectively) and cleared when the error is zero (in step S92). When the *PLLCounter* exceeds some predefined value, which is 12 in this embodiment, the centre frequency (default dividing factor) is adjusted up or down accordingly to compensate the oscillator drift. The *PLLCounter* is then reset to be monitoring the new (adjusted) state (in step S114 and S 134).

An additional branch is used in the method for emergency situations when the PLL error exceeds +/- 1 Bluetooth clock and therefore requires rapid resynchronisation. This is done simply by setting the "Locked " flag to the false state (in step S 124 and S102) and the PLL will restart with the correct value during the next algorithm pass.

In alternate embodiments of the present invention, other wireless transmission protocols can be used, including but not limited to those confirming to the IEE 802.11 standards. In these embodiments it may be necessary to provide a separate master clock signal for transmission and reception hardware which does not use a master clock which can be directly read from the hardware itself by the PSoC.

Although a heart rate sensor and a breathing sensor have been described, the present invention can be applied to any sort of sensor, including other medical sensors and any other application in which remote sensors are used such as burglar alarms.

## Claims

1. An apparatus for transmitting data by radio to a receiver, the apparatus comprising:
a controller (34, 124, 126, 128), the controller comprising:
an input for inputting data;
a local clock (130, 132, 134); and
a time stamp circuit adapted to add time stamp data representing the value of the local clock to the data to form time stamped data;
the apparatus further comprising a transmitter circuit adapted to receive the time stamped data from the time stamp circuit and to transmit the time stamped data by radio to the receiver;
**characterised in that** the local clock (130, 132, 134) forms part of a phase locked loop said phase locked loop being adapted to be synchronised at predetermined intervals to a master clock signal; and **in that** the controller (34, 124, 126, 128) further comprises a comparator for determining the error between the local clock and the master clock signal, and wherein the controller is adapted to set the value of the local clock to the value of the master clock signal when the comparator determines that the error exceeds a predetermined threshold amount.

2. An apparatus according to claim 1, further comprising a receiver circuit adapted to receive the master clock signal by radio.

3. An apparatus according to claim 2, wherein the receiver circuit is further adapted to receive time stamped data transmitted from another apparatus.

4. An apparatus according to claim 2 or 3, wherein the transmitter circuit and the receiver circuit are combined in a transceiver circuit (32, 112, 114, 116).

5. An apparatus according to claim 2, 3 or 4, wherein the transmitter and receiver are compliant with the Bluetooth HCI protocol version 1.2, and the master clock signal is the Bluetooth piconet master clock.

6. An apparatus according to any one of the preceding claims, wherein the predetermined interval is in the range of 100 ms to 200 ms, preferably approximately 160 ms.

7. An apparatus according to claim 1, wherein the threshold amount is equal to one period of the master clock signal.

8. An apparatus according to any one of the preceding claims, wherein the controller (34, 124, 126, 128) is a Programmable System on Chip.

9. An apparatus according to claim 8, wherein the Phase locked loop comprises a local oscillator (144) contained within the PsoC.

10. An apparatus according to any one of claims 1 to 8, wherein the Phase locked loop comprises a crystal-reference oscillator.

11. An apparatus according to any one of the preceding claims, wherein the Phase locked loop is implemented by a combination of hardware and software.

12. A wireless sensor (2, 4, 6, 8, 30, 80) for remote telemetry, the sensor comprising:
an apparatus according to any one of the preceding claims; and
at least one sensing circuit connected to the input of the controller.

13. A wireless sensor (2, 4, 6, 8, 30, 80) according to claim 12, wherein the at least one sensing circuit is a heart rate sensor (36).

14. A wireless sensor (2, 4, 6, 8, 30, 80) according to claim 13, wherein the at least one sensing circuit is a breathing rate sensor (84).

15. A wireless telemetry system comprising:
at least one wireless sensor (2, 4, 6, 8, 30, 80) according to any one of claims 12 to 14; and
a base station (10) for receiving data from the at least one wireless sensor (2, 4, 6, 8, 30, 80).

16. A wireless telemetry system according to claim 15, wherein the base station (10) is a wireless sensor according to any one of claims 12 to 14 when appendant to claim 3.

17. A method of transmitting data by radio, the method comprising:
adding time stamp data representing the value of a local clock to the data to form time stamped data; and
transmitting the time stamped data by radio;
**characterised in that** the method further comprises synchronising the local clock to a master clock signal at predetermined intervals using a phase locked loop; and wherein said step of synchronising further comprises:
determining the error (S70) between the local clock and the master clock signal; and,
setting the local clock to the value of the master clock signal (S52) in the event that it is determined (S120, S100) that the error between the local clock and the master clock signal exceeds a predetermined amount.

18. A method according to claim 17, further comprising the step of receiving the master clock signal by radio.

19. A method according to claim 18, wherein the predetermined intervals are in the range of 100 ms to 200 ms, preferably 160 ms.

20. A method according to claim 17, wherein the predetermined amount is equal to one period of the master clock signal.

## Patentansprüche

1. Vorrichtung zur Übertragung von Daten über Funk zu einem Empfänger, wobei die Vorrichtung umfasst:
eine Steuerung (34, 124, 126, 128), wobei die Steuerung umfasst:
einen Eingang zur Eingabe von Daten;
einen lokalen Takt (130, 132, 134); und
eine Zeitprotokollschaltung, welche derart ausgestaltet ist, dass sie den Daten Zeitprotokolldaten, welche den Wert des lokalen Takts repräsentieren, hinzufügt, um zeitprotokollierte Daten auszubilden;
wobei die Vorrichtung darüber hinaus eine Sendeschaltung umfasst, welche derart ausgestaltet ist, dass sie die zeitprotokollierten Daten von der Zeitprotokollschaltung empfängt und die zeitprotokollierten Daten über Funk zu dem Empfänger sendet;
**dadurch gekennzeichnet,**
**dass** der lokale Takt (130, 132, 134) einen Teil einer Phasenregelschleife ausbildet, wobei die Phasenregelschleife derart ausgestaltet ist, dass sie zu vorbestimmten Intervallen mit einem Haupttaktsignal synchronisiert wird; und
**dass** die Steuerung (34, 124, 126, 128) darüber hinaus einen Komparator umfasst, um den Fehler zwischen dem lokalen Takt und dem Haupttaktsignal zu bestimmen, und wobei die Steuerung ausgestaltet ist, um den Wert des lokalen Takts auf den Wert des Haupttaktsignals einzustellen, wenn der Komparator bestimmt, dass der Fehler einen vorbestimmten Schwellenwert übersteigt.

2. Vorrichtung nach Anspruch 1, **dadurch gekennzeichnet, dass** die Vorrichtung darüber hinaus eine Empfängerschaltung umfasst, welche derart ausgestaltet ist, dass sie das Haupttaktsignal über Funk empfängt.

3. Vorrichtung nach Anspruch 2, **dadurch gekennzeichnet, dass** die Empfängerschaltung darüber hinaus derart ausgestaltet ist, dass sie zeitprotokollierte Daten, welche von einer anderen Vorrichtung übertragen werden, empfängt.

4. Vorrichtung nach Anspruch 2 oder 3, **dadurch gekennzeichnet, dass** die Sendeschaltung und die Empfängerschaltung in einer Sende-/Empfangsschaltung (32, 112, 114, 116) kombiniert sind.

5. Vorrichtung nach Anspruch 2, 3 oder 4, **dadurch gekennzeichnet, dass** der Sender und der Empfänger mit dem Bluetooth HCI-Protokoll Version 1.2 konform sind, und dass das Haupttaktsignal der Haupttakt eines Bluetooth-Piconetzes ist.

6. Vorrichtung nach einem der vorhergehenden Ansprüche, **dadurch gekennzeichnet, dass** das vorbestimmte Intervall in dem Bereich von 100 ms bis 200 ms, vorzugsweise ungefähr bei 160 ms, liegt.

7. Vorrichtung nach Anspruch 1, **dadurch gekennzeichnet, dass** der Schwellenwert einer Periode des Haupttaktsignals entspricht.

8. Vorrichtung nach einem der vorhergehenden Ansprüche, **dadurch gekennzeichnet, dass** die Steuerung (34, 124, 126, 128) ein programmierbares On-Chip-System ist.

9. Vorrichtung nach Anspruch 8, **dadurch gekennzeichnet, dass** der Phasenregelkreis einen lokalen Oszillator (144), welcher in dem PsoC enthalten ist, umfasst.

10. Vorrichtung nach einem der Ansprüche 1 bis 8, **dadurch gekennzeichnet, dass** der Phasenregelkreis einen Quarz-Referenz-Oszillator umfasst.

11. Vorrichtung nach einem der vorhergehenden Ansprüche, **dadurch gekennzeichnet, dass** der Phasenregelkreis durch eine Kombination von Hardware und Software implementiert ist.

12. Drahtloser Sensor (2, 4, 6, 8, 30, 80) zur abgesetzten Telemetrie, wobei der Sensor umfasst:
eine Vorrichtung nach einem der vorhergehenden Ansprüche; und
zumindest eine Sensorschaltung, welche mit dem Eingang der Steuerung verbunden ist.

13. Drahtloser Sensor (2, 4, 6, 8, 30, 80) nach Anspruch 12, **dadurch gekennzeichnet, dass** die zumindest eine Sensorschaltung ein Herzschlagsensor (36) ist.

14. Drahtloser Sensor (2, 4, 6, 8, 30, 80) nach Anspruch 13, **dadurch gekennzeichnet, dass** die zumindest eine Sensorschaltung ein Atmungsratensensor (34) ist.

15. Drahtloses Telemetriesystem, umfassend:
zumindest einen drahtlosen Sensor (2, 4, 6, 8, 30, 80) nach einem der Ansprüche 12 bis 14; und
eine Basisstation (10), um Daten von dem zumindest einen drahtlosen Sensor (2, 4, 6, 8, 30, 80) zu empfangen.

16. Drahtloses Telemetriesystem nach Anspruch 15, **dadurch gekennzeichnet, dass** die Basisstation (10) ein drahtloser Sensor nach einem der Ansprüche 12 bis 14 ist, wenn dieser abhängig von dem Anspruch 3 ist.

17. Verfahren zum Übertragen von Daten über Funk, wobei das Verfahren umfasst:
Hinzufügen von Zeitprotokolldaten, welche den Wert eines lokalen Takts repräsentieren, zu den Daten, um zeitprotokollierte Daten auszubilden; und
Übertragen der zeitprotokollierten Daten über Funk;
**dadurch gekennzeichnet,**
**dass** das Verfahren darüber hinaus ein Synchronisieren des lokalen Takts mit einem Haupttaktsignal zu vorbestimmten Intervallen mittels eines Phasenregelkreises umfasst; und wobei der Schritt des Synchronisierens darüber hinaus umfasst:
Bestimmen des Fehlers (S70) zwischen dem lokalen Takt und dem Haupttaktsignal; und
Einstellen des lokalen Takts auf den Wert des Haupttaktsignals (S52), wenn bestimmt wird (S120, S100), dass der Fehler zwischen dem lokalen Takt und dem Haupttaktsignal einen vorbestimmten Wert übersteigt.

18. Verfahren nach Anspruch 17, **dadurch gekennzeichnet, dass** das Verfahren darüber hinaus den Schritt eines Empfangens des Haupttaktsignals über Funk umfasst.

19. Verfahren nach Anspruch 18, **dadurch gekennzeichnet, dass** die vorbestimmten Intervalle in dem Bereich von 100 ms bis 200 ms, vorzugsweise bei 160 ms, liegen.

20. Verfahren nach Anspruch 17, **dadurch gekennzeichnet, dass** der vorbestimmte Wert einer Periode des Haupttaktsignals entspricht.

## Revendications

1. Dispositif pour la transmission de données par radio à un récepteur, le dispositif comprenant :
un dispositif de commande (34, 124, 126, 128), le dispositif de commande comprenant :
une entrée pour l'entrée de données ;
une horloge locale (130, 132, 134) ; et
un circuit d'horodatage adapté pour ajouter des données d'horodatage représentant la valeur de l'horloge locale aux données pour former des données horodatées ;
le dispositif comprenant en outre un circuit émetteur adapté pour recevoir les données horodatées à partir du circuit d'horodatage et pour transmettre les données horodatées par radio au récepteur ;
**caractérisé en ce que** l'horloge locale (130, 132, 134) fait partie d'une boucle à verrouillage de phase, ladite boucle à verrouillage de phase étant adaptée pour être synchronisée à des intervalles prédéterminés sur un signal d'horloge maîtresse ; et **en ce que** le dispositif de commande (34, 124, 126, 128) comprend en outre un comparateur pour déterminer l'erreur entre l'horloge locale et le signal d'horloge maîtresse, et dans lequel le dispositif de commande est adapté pour régler la valeur de l'horloge locale sur la valeur du signal d'horloge maîtresse lorsque le comparateur détermine que l'erreur dépasse une valeur de seuil prédéterminée.

2. Dispositif selon la revendication 1, comprenant en outre un circuit récepteur adapté pour recevoir le signal d'horloge maîtresse par radio.

3. Dispositif selon la revendication 2, dans lequel le circuit récepteur est en outre adapté pour recevoir des données horodatées transmises depuis un autre dispositif.

4. Dispositif selon la revendication 2 ou 3, dans lequel le circuit émetteur et le circuit récepteur sont combinés dans un circuit émetteur-récepteur (32, 112, 114, 116).

5. Dispositif selon la revendication 2, 3 ou 4, dans lequel l'émetteur et le récepteur sont compatibles avec le protocole HCI Bluetooth version 1.2, et le signal d'horloge maîtresse est l'horloge maîtresse d'un piconet Bluetooth.

6. Dispositif selon l'une quelconque des revendications précédentes, dans lequel l'intervalle prédéterminé se situe dans la plage allant de 100 ms à 200 ms, de préférence environ 160 ms.

7. Dispositif selon la revendication 1, dans lequel la valeur de seuil est égale à une période du signal d'horloge maîtresse.

8. Dispositif selon l'une quelconque des revendications précédentes, dans lequel le dispositif de commande (34, 124, 126, 128) est un système sur puce programmable.

9. Dispositif selon la revendication 8, dans lequel la boucle à verrouillage de phase comprend un oscillateur local (144) contenu dans le système sur puce programmable.

10. Dispositif selon l'une quelconque des revendications 1 à 8, dans lequel la boucle à verrouillage de phase comprend un oscillateur de référence à cristal.

11. Dispositif selon l'une quelconque des revendications précédentes, dans lequel la boucle à verrouillage de phase est mise en oeuvre par une combinaison de matériel et de logiciel.

12. Capteur sans fil (2, 4, 6, 8, 30, 80) pour une télémétrie à distance, le capteur comprenant :
un dispositif selon l'une quelconque des revendications précédentes ; et
au moins un circuit capteur connecté à l'entrée du dispositif de commande.

13. Capteur sans fil (2, 4, 6, 8, 30, 80) selon la revendication 12, dans lequel l'au moins un circuit capteur est un capteur de rythme cardiaque (36).

14. Capteur sans fil (2, 4, 6, 8, 30, 80) selon la revendication 13, dans lequel l'au moins un circuit capteur est un capteur de rythme respiratoire (84).

15. Système de télémétrie sans fil comprenant :
au moins un capteur sans fil (2, 4, 6, 8, 30, 80) selon l'une quelconque des revendications 12 à 14 ; et
une station de base (10) pour recevoir des données à partir de l'au moins un capteur sans fil (2, 4, 6, 8, 30, 80).

16. Système de télémétrie sans fil selon la revendication 15, dans lequel la station de base (10) est un capteur sans fil selon l'une quelconque des revendications 12 à 14 lorsqu'elles dépendent de la revendication 3.

17. Procédé de transmission de données par radio, le procédé comprenant :
l'ajout de données d'horodatage représentant la valeur d'une horloge locale aux données pour former des données horodatées ; et
la transmission des données horodatées par radio ;
**caractérisé en ce que** le procédé comprend en outre la synchronisation de l'horloge locale sur un signal d'horloge maîtresse à des intervalles prédéterminés à l'aide d'une boucle à verrouillage de phase ; et dans lequel ladite étape de synchronisation comprend en outre :
la détermination de l'erreur (S70) entre l'horloge locale et le signal d'horloge maîtresse ; et,
le réglage de l'horloge locale sur la valeur du signal d'horloge maîtresse (S52) dans le cas où il est déterminé (S120, S100) que l'erreur entre l'horloge locale et le signal d'horloge maîtresse dépasse une valeur prédéterminée.

18. Procédé selon la revendication 17, comprenant en outre l'étape de réception du signal d'horloge maîtresse par radio.

19. Procédé selon la revendication 18, dans lequel les intervalles prédéterminés se situent dans la plage allant de 100 ms à 200 ms, de préférence 160 ms.

20. Procédé selon la revendication 17, dans lequel la valeur prédéterminée est égale à une période du signal d'horloge maîtresse.
